# EUROPÄISCHE PATENTSCHRIFT

(11) **EP 0 913 015 B1**
(45) Veröffentlichungstag und Bekanntmachung des Hinweises auf die Patenterteilung: **16.05.2001**
(21) Anmeldenummer: 97904432.8
(22) Anmeldetag: 13.02.1997
(51) Int. Cl.: H02B 1/56

(54) **KÜHLGERÄT ZUM AUFBAU AUF EINEM SCHALTSCHRANK**
COOLER FOR FITTING ON A CONTROL BOX
DISPOSITIF DE REFROIDISSEMENT A MONTER SUR UNE ARMOIRE DE COMMANDE

(30) Priorität: 13.03.1996 DE 19609796
(43) Veröffentlichungstag der Anmeldung: 06.05.1999
(73) Patentinhaber: Rittal-Werk Rudolf Loh GmbH & Co. KG, 35745 Herborn (DE)
(72) Erfinder: DIEBEL, Michael, D-35687 Dillenburg (DE); KÜSTER, Frank, D-35767 Breitscheid-Medenbach (DE); EDELMANN, Achim, D-35686 Dillenburg (DE)
(74) Vertreter: Fleck, Hermann-Josef, Dr.-Ing.
(86) Internationale Anmeldenummer: EP9700661
(87) Internationale Veröffentlichungsnummer: WO9734348

(56) Entgegenhaltungen:
- EP-A- 0 284 889
- DE-U- 8 130 651
- DE-U- 29 519 260
- US-A- 4 609 126

## Beschreibung

Die Erfindung betrifft ein Kühlgerät mit den Merkmalen des Oberbegriffs des Anspruchs 1.

Ein solches Kühlgerät geht aus der DE 81 30 651 A1 hervor. In diesem Dokument ist ein Schaltschrank beschrieben, auf dessen Deckwand ein Dachelement aufgesetzt ist. Zwischen der Deckwand und dem Dachelement ist ein Lüftungsraum gebildet. Über diesen kann die warme, aus dem Schaltschrank kommende Luft in die Umgebung abgeführt werden.

Derartige Kühlgeräte haben in der Regel in den Seitenwänden einen Lufteinlaß für die Frischluft und einen Luftauslaß für die erwärmte Abluft. Dabei sind Lufteinlaß und Luftauslaß mit einem Lüftungsgitter verschlossen. Es ist jedoch nicht eindeutig verhindert, daß beim Aufstellen des Schaltschrankes mit dem aufgebauten Klimagerät im Freien Feuchtigkeit und Schmutzteile über das Klimagerät in den Schaltschrank eindringen können.

Es ist Aufgabe der Erfindung, bei einem Kühlgerät der eingangs erwähnten Art, den Schutz des Kühlgerätes und des Schaltschrankes gegen Feuchtigkeit, insbesondere Regen und dgl. und Schmutzteile wesentlich zu verbessern.

Diese Aufgabe wird nach der Erfindung durch die kennzeichnenden Merkmale des Anspruchs 1 gelöst.

Die Seitenwände des Kühlgerätegehäuses können vollständig geschlossen sein. Regen und dgl. tropft über den Rand des Dachelementes ab. Der Lufteinlaß und der Luftauslaß werden vom Dachelement überdeckt, so daß diese gegen Regen und dgl. sowie Staub geschützt sind. Dabei kann zur Verbesserung des Schutzes noch vorgesehen sein, daß zumindest der Lufteinlaß mit einem Lüftungsgitter versehen ist.

Der Regenschutz wird nach einer weiteren Ausgestaltung dadurch verbessert, daß das Dachelement mit einem umlaufenden, nach unten abgewinkelten Rand versehen ist, der sich teilweise in den Bereich der Seitenwände des Kühlgerätegehäuses erstreckt. Das Abtropfen des Regens wird dadurch erleichtert, daß das Dachelement eine horizontale ausgerichtete Deckplatte aufweist, die über geneigte, abfallende Übergangsabschnitte in den Rand übergeht und daß zusätzlich die Ecken des Dachelementes im Bereich des Randes und der Übergangsabschnitte abgeschrägt sind.

Eine an die Querschnittsform des Schaltschrankes angepaßte Ausgestaltung ist dadurch gekennzeichnet, daß bei einem im Querschnitt rechteckförmigen Kühlgerätegehäuse die Trennwand etwa mittig parallel zu den Schmalseiten des Kühlgerätegehäuses angeordnet ist und die Kammern mit dem Lufteinlaß und dem Luftauslaß in Richtung der Längsseiten des Kühlgerätegehäuses hintereinander liegen.

Die Bildung des Lüftungsschlitzes und der Kammern im Bereich des Dachelementes wird nach einer Ausgestaltung dadurch erreicht, daß das Dachelement über Abstandselemente, die in den Eckbereichen der Oberseite des Kühlgerätegehäuses angeordnet sind, mit dem Kühlgerätegehäuse verbunden sind.

Eine vollständige Entkopplung der Kammern wird dadurch erreicht, daß das Trennblech an den Innenquerschnitt des Dachelementes angepaßt ist und sich auf der Oberseite des Kühlgerätegehäuses abstützt.

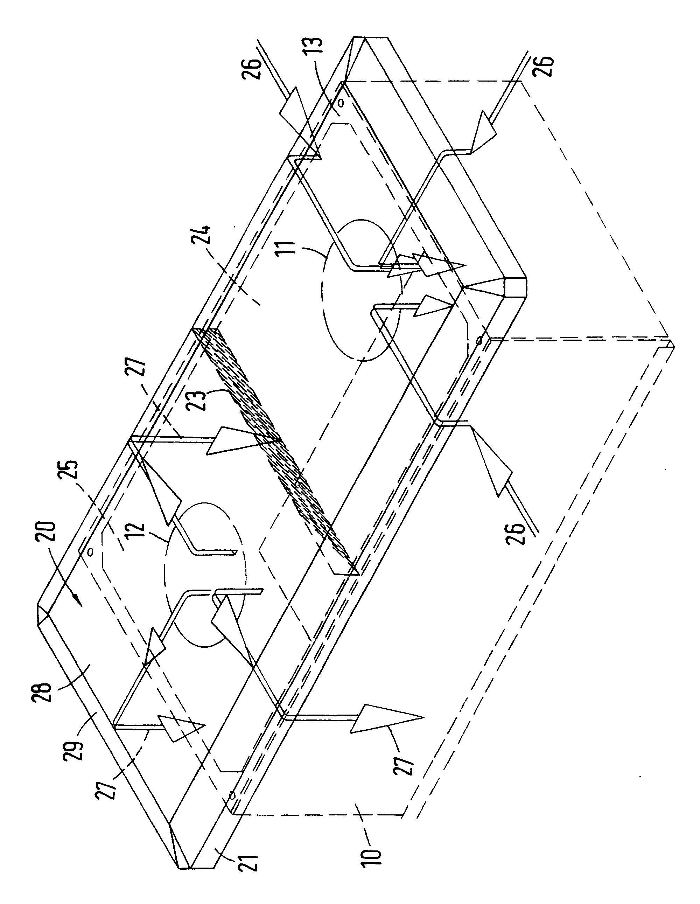

Die Erfindung wird anhand eines in der Zeichnung dargestellten Ausführungsbeispiels näher erläutert.

Das Kühlgerätegehäuse 10 nimmt in bekannter Weise die Bauteile des Kühlgerätes auf und steht mit im Boden des Kühlgerätegehäuses 10 vorgesehener Ansaugöffnung mit dem Innern des Schaltschrankes in Verbindung. Der Aufbau des Klimagerätes kann in bekannter Weise erfolgen. Einzelheiten desselben sind hier nicht gezeigt, da diese für die vorliegende Erfindung nicht von Bedeutung sind.

Nach der Erfindung sind in der Oberseite 13 des Kühlgerätegehäuses 10 ein Lufteinlaß 11 und ein Luftauslaß 12 vorgesehen. Dabei kann zur Verbesserung des Regen- und Staubschutzes zumindest der Lufteinlaß 11 mit einem Lüftungsgitter versehen sein.

Die Oberseite des Kühlgerätegehäuses 10 wird mit einem Dachelement 20 abgedeckt, das z.B. mit Abstandselementen im Bereich der Ecken am Kühlgerätegehäuse 10 auf Abstand zu demselben befestigt ist. Das Dachelement 20 besteht aus einer horizontalen Deckplatte 28, die über abfallend geneigte Übergangsabschnitt 29 in einen umlaufenden, vertikalen Rand 21 übergeht. Der Rand 21 des angebrachten Dachelementes 20 erstreckt sich teilweise in den Bereich der Seitenwände des Kühlgerätegehäuses 10, läßt aber einen umlaufenden, nach unten offenen Lüftungsschlitz frei. Das Dachelement 20 ist mittels eines Trennbleches 23 in zwei Kammern 24 und 25 unterteilt, wobei die Kammer 24 über dem Lufteinlaß 11 und die Kammer 25 über dem Luftauslaß 12 liegen. Beim Ausführungsbeispiel unterteilt die parallel zu den Schmalseiten des Kühlgerätegehäuses ausgerichtete Trennwand 23 das Dachelement 20 so, daß die beiden Kammern 24 und 25 wie der Lufteinlaß 11 und der Luftauslaß 12 in Richtung der Längsseiten des Kühlgerätegehäuses 10 hintereinander liegen.

Wie die Pfeile 26 zeigen, kann dreiseitig Frischluft in die Kammer 24 und über den Lufteinlaß 11 in das Kühlgerätegehäuse 10 gelangen. Die aus dem Kühlgerätegehäuse 10 austretende erwärmte Abluft gelangt über den Luftauslaß 12 in die Kammer 25 und kann dreiseitig aus dieser ausströmen, wie die Pfeile 27 zeigen.

Die Querschnittsform des Kühlgerätegehäuses 10 und des Dachelementes 20 kann auch anders gestaltet werden. Die Unterteilung des Dachelementes 20 mittels des Trennbleches 23 in die Kammern 24 und 25 muß stets so vorgenommen werden, daß die eine Kammer 24 mit dem Lufteinlaß 11 und die andere Kammer 25 mit dem Luftauslaß 12 in Verbindung stehen.

Aus optischen Gründen können im Bereich der Ecken des Dachelementes 20 die Übergangsabschnitte 29 und der Rand 21 abgeschrägt sein.

Das Trennblech 23 kann an den Innenquerschnitt des Dachelementes 20 angepaßt sein und sich auf der Oberseite 13 des Kühlgerätegehäuses 10 abstützen, um die Kammern 24 und 25 vollkommen voneinander zu trennen.

## Patentansprüche

1. Kühlgerät, das auf die Deckwand eines Schaltschrankes aufsetzbar ist und mit diesem über eine Ansaugöffnung und eine Eintrittsöffnung in Verbindung bringbar ist, wobei ein Dachelement (20) vorhanden ist, welches das Kühlgerätegehäuse (10) allseitig überragt und ringsum einen nach unten offenen Lüftungsschlitz bildet,
dadurch gekennzeichnet,
dass in die dem Schaltschrank abgekehrte Oberseite (13) des Kühlgerätegehäuses (10) ein Lufteinlaß (11) und ein Luftauslaß (12) eingebracht sind, daß mit der Oberseite (13) des Kühlgerätegehäuses (10) im Abstand zu derselben ein Dachelement (20) verbunden ist, und
dass mittels Trennblechen (23) im Dachelement (20) mindestens zwei Kammern (24,25) abgeteilt sind, die jeweils mit dem Lufteinlaß (11) und dem Luftauslaß (12) in Verbindung stehen.

2. Kühlgerät nach Anspruch 1,
dadurch gekennzeichnet,
daß das Dachelement (20) mit einem umlaufenden, nach unten abgewinkelten Rand (21) versehen ist, der sich teilweise in den Bereich der Seitenwände des Kühlgerätegehäuses (10) erstreckt.

3. Kühlgerät nach Anspruch 1 oder 2,
dadurch gekennzeichnet,
daß bei einem im Querschnitt rechteckförmigen Kühlgerätegehäuse (10) die Trennwand (23) etwa mittig parallel zu den Schmalseiten oder Längsseiten des Kühlgerätegehäuses (10) angeordnet ist und die Kammern (24,25) mit dem Lufteinlaß (11) und dem Luftauslaß (12) in Richtung der Längsseiten oder Schmalseiten des Kühlgerätegehäuses (10) senkrecht zum Trennblech liegen.

4. Kühlgerät nach einem der Ansprüche 1 bis 3,
dadurch gekennzeichnet,
daß das Dachelement (20) über Abstandselemente, die in den Eckbereichen der Oberseite (13) des Kühlgerätegehäuses (10) angeordnet sind, mit dem Kühlgerätegehäuse (10) verbunden sind.

5. Kühlgerät nach einem der Ansprüche 1 bis 4,
dadurch gekennzeichnet,
daß das Dachelement (20) eine horizontal ausgerichtete Deckplatte (28) aufweist, die über geneigte, abfallende Übergangsabschnitte (29) in den Rand (21) übergeht.

6. Kühlgerät nach Anspruch 5,
dadurch gekennzeichnet,
daß die Ecken des Dachelementes (20) im Bereich des Randes (21) und der Übergangsabschnitte (29) abgeschrägt sind.

7. Kühlgerät nach einem der Ansprüche 1 bis 6,
dadurch gekennzeichnet,
daß zumindest der Lufteinlaß (11) mit einem Lüftungsgitter versehen ist.

8. Kühlgerät nach einem der Ansprüche 1 bis 7,
dadurch gekennzeichnet,
daß das Trennblech (23) an den innenquerschnitt des Dachelementes (20) angepaßt ist und sich auf der Oberseite (13) des Kühlgerätegehäuses (10) abstützt.

## Claims

1. Cooling apparatus which can be placed on the top wall of a switchgear cabinet and connected to the latter via an aspirating hole and an inlet aperture, a roof member (20) being present which rises above the cooling apparatus housing (10) on all sides and forms all the way round a downwardly open ventilation slot,
**characterised in that**
into the upper side (13) of the cooling apparatus (10) remote from the switchgear cabinet are introduced an air admission port (11) and an air exit (12), in that a roof member (20) is connected to the upper side (13) of the cooling apparatus housing (10) at a spacing therefrom, and in that in the roof member (20) at least two chambers (24, 25), which respectively communicate with the air admission port (11) and the air exit (12), are civided by means of partition plates (23).

2. Cooling apparatus according to claim 1,
**characterised in that**
the roof member (20) is provided with a peripheral edge (21) which is angled downwards and extends partially into the region of the side walls of the cooling apparatus housing (10).

3. Cooling apparatus according to claim 1 or 2,
**characterised in that**
in a cooling apparatus housing (10) which is rectangular in cross-section, the partition wall (23) is disposed roughly centrally, parallel to the narrow sides or longitudinal sides of the cooling apparatus housing (10), and the chambers (24, 25) with the air admission port (11) and the air exit (12) lie in the direction of the longitudinal sides or narrow sides of the cooling apparatus housing (10) perpendicular to the partition plate.

4. Cooling apparatus according to one of claims 1 to 3,
**characterised in that**
the roof member (20) is connected to the cooling apparatus housing (10) via spacing elements which are disposed in the corner regions of the upper side (13) of the cooling apparatus housing (10).

5. Cooling apparatus according to one of claims 1 to 4,
**characterised in that**
the roof member (20) has a horizontally aligned cover plate (28) which merges into the edge (21) via sloping, tapering transitional portions (29).

6. Cooling apparatus according to claim 5,
**characterised in that**
the corners of the roof member (20) are chamfered in the region of the edge (21) and the transitional portions (29).

7. Cooling apparatus according to one of claims 1 to 6,
**characterised in that**
at least the air admission port (11) is provided with a ventilation grid.

8. Cooling apparatus according to one of claims 1 to 7,
**characterised in that**
the partition plate (23) is adapted to the inner cross-section of the roof member (20) and rests on the upper side (13) of the cooling apparatus housing (10).

## Revendications

1. Dispositif refroidisseur qui peut être posé sur une armoire électrique et être mis en liaison avec elle par l'intermédiaire d'une ouverture d'aspiration et d'une ouverture d'entrée, un élément de toit (20) étant présent qui dépasse de tous côtés du boîtier (10) du dispositif refroidisseur et forme tout autour une fente de refroidissement ouverte vers le bas,
caractérisé en ce
qu'une entrée d'air (11) et une sortie d'air (12) sont ménagées dans la face supérieure (13) du boîtier (10) du dispositif refroidisseur écartée de l'armoire électrique,
qu'un élément de toit (20) est relié à la face supérieure (13) de boîtier (10) du dispositif refroidisseur à écartement de celle-ci et
qu'au moins deux chambres (24, 25) sont séparées dans l'élément de toit (20) au moyen de tôles de séparation (23) et sont en liaison respectivement avec l'entrée d'air (11) et la sortie d'air (12).

2. Dispositif refroidisseur selon la revendication 1,
caractérisé en ce
que l'élément de toit (20) est muni d'un bord (21) continu recourbé vers le bas, qui s'étend partiellement dans la zone des parois latérales du boîtier (10) du dispositif refroidisseur.

3. Dispositif refroidisseur selon la revendication 1 ou 2,
caractérisé en ce
que, dans le cas d'un boîtier (10) du dispositif refroidisseur sensiblement de forme rectangulaire en coupe transversale, la paroi de séparation (23) est disposée sensiblement centralement parallèle aux petites faces ou aux grandes faces du boîtier (10) du dispositif refroidisseur et les chambres (24, 25) se trouvent, avec l'entrée d'air (11) et la sortie d'air (12) en direction des grandes faces ou des petites faces du boîtier (10) du dispositif refroidisseur, orthogonales à la tôle de séparation.

4. Dispositif refroidisseur selon l'une des revendications 1 à 3,
caractérisé en ce
que l'élément de toit (20) est relié au boîtier (10) du dispositif refroidisseur par l'intermédiaire d'éléments d'entretoisement qui sont disposés dans les zones de coin de la face supérieure (13) du boîtier (10) du dispositif refroidisseur.

5. Dispositif refroidisseur selon l'une des revendications 1 à 4,
caractérisé en ce
que l'élément de toit (20) présente une plaque de couverture (28) dirigée horizontalement qui se transforme en le bord (21) par l'intermédiaire de sections de transition (29) inclinées descendantes.

6. Dispositif refroidisseur selon la revendication 5,
caractérisé en ce
que les coins de l'élément de toit (20) sont biseautés dans la zone du bord (21) et des sections de transition (29).

7. Dispositif refroidisseur selon l'une des revendications 1 à 6,
caractérisé en ce
qu'est prévue au moins une entrée d'air (11) avec une grille d'aération.

8. Dispositif refroidisseur selon l'une des revendications 1 à 7,
caractérisé en ce que, la grille de séparation (23) est adaptée à la section transversale intérieure de l'élément de toit (20) et s'appuie sur la face supérieure (13) du boîtier (10) du dispositif refroidisseur.
